# EUROPEAN PATENT SPECIFICATION

(11) **EP 4 197 677 B1**
(45) Date of publication and mention of the grant of the patent: **09.10.2024**
(21) Application number: 21214765.6
(22) Date of filing: 15.12.2021
(51) Int. Cl.: B23B 51/06, B23B 51/00

(54) **DRILL WITH IMPROVED CHIP EVACUATION**
BOHRER MIT VERBESSERTER SPANABFUHR
FORET PRÉSENTANT UNE MEILLEURE ÉVACUATION DES COPEAUX

(43) Date of publication of application: 21.06.2023
(73) Proprietor: AB Sandvik Coromant, 811 81 Sandviken (SE)
(72) Inventor: Friberg, Wilhelm, 115 20 Stockholm (SE); Nilsson, Lucas, 972 39 Luleå (SE)
(74) Representative: Sandvik

(56) References cited:
- CN-A- 108 526 554
- DE-A1- 102013 000 566
- DE-A1- 19 707 549

## Description

### TECHNICAL FIELD

The present invention relates to a drill for metal cutting machining, more particular to a drill for metal cutting machining with improved chip evacuation.

### BACKGROUND

Drilling is one of the most common machining operations in modern manufacturing and provides a reliable and cost effective method to make holes with high precision. During the drilling operation it is important to use a coolant to cool the drill and the work piece and thus prolong the lifetime of the drill and to improve the quality of the hole. The coolant passes through coolant channels in the drill which terminate at the front end of the drill. The coolant also evacuates chips produced in the drilling operation from the drill area via chip flutes in the envelope surface of the drill. DE 197 07 549 A1 discloses such a drill.

A problem that may occur during drilling, especially when drilling difficult to machine materials, such as, for example, Titanium alloys, is a phenomenon called chip jamming. Chip jamming is when machined chips gets stuck in a chip flute, between the surface of the chip flute and the wall of the drilled hole, thus to some extent or completely blocking the chip flute. Chip jamming is detrimental to the drilling process and may lead to a damaged drill tool and to an impaired quality of the drilled hole.

Therefore, it is a need for improvements in a drill for metal cutting machining such that chip jamming can be prevented or, if chip jamming has occurred, loosen the jammed chips to again achieve an unhindered flow in the chip flutes.

It is therefore an object of the present invention to present an improved drill for metal cutting machining with a decreased risk of chip jamming.

### SUMMARY

According to the present invention, the above mentioned object is achieved by means of a drill for metal cutting machining having the features defined in claim 1.

The drill for metal cutting machining according to the present invention comprises: a central rotation axis defining a longitudinal direction of the drill and around which the drill is rotatable, an axially front end, an axially rear end, an envelope surface extending between the front end and the rear end, a shaft extending axially rearward from the front end, a shank extending axially forward from the rear end, at least one cutting insert releasably mounted at the front end, a first and a second chip flute in the envelope surface of the shaft, a coolant chamber inside the shank, a first and second coolant channel extending from the front end of the coolant chamber and terminating at the front end of the drill. The first coolant channel is associated with the first chip flute and the second coolant channel is associated with the second chip flute. The coolant chamber comprises a flow control element, which is movable between a neutral position, in which coolant flow is distributed substantially equally to the first and second coolant channels, and an active position, in which the flow control element directs the coolant flow at least mainly to one of said coolant channels, and that the flow control element is arranged to move from said neutral position to said active position in response to a flow restriction in one of the chip flutes, such that the coolant is directed at least mainly to said one coolant channel associated with the chip flute having a flow restriction.

The present inventors have realized that this configuration alleviates the problem with chip jamming. When chip jamming occurs in the first chip flute the flow of coolant in the first chip flute will be restricted. This flow restriction will lead to an increase in the coolant pressure in the first coolant channel associated with the first chip flute. This creates a pressure difference between the first coolant channel and the second coolant channel. The pressure difference moves the flow control element from a neutral position to an active position in which the flow in the second coolant channel is restricted. This disrupts, or drastically reduces, the coolant flow in the second channel and in the second chip flute. The reduced flow in the second coolant channel implies that the pressure of the coolant in the first coolant channel and first chip flute increases. The increased pressure in the first chip flute results in that the jammed chips in the first chip flute are flushed away thus removing the chip jam from the first chip flute. Preferably, the flow in the restricted coolant channel is reduced at least 30 % when the flow control element is in an active position, more preferably at least 50 % of the flow is restricted, even more preferably at least 70 % of the flow is restricted, even more preferably at least 90 % of the flow is restricted, and most preferably approximately 100 % of the flow is restricted.

Associated with here means that a majority of the coolant flow from the first coolant channel reaches the first chip flute and the majority of the coolant flow from the second coolant channel reaches the second chip flute. The reason for this may be due to different design alternatives. That the first coolant channel terminates close to or in the first chip flute, that the outlet of the first coolant channel is directed towards the first chip flute or that the rotation of the drill implies that most of the coolant from the first coolant channel reaches the first chip flute. The same applies for the second coolant channel and the second chip flute.

Many different types of coolant can be used, for example a water-based coolant or an oil-based coolant.

According to one preferable embodiment, the flow control element automatically moves from the neutral position to an active position when there is a pressure difference in the coolant between the first and the second coolant channel. This configuration ensures that the flow control element moves from the neutral position to an active position, without any outside assistance or actuators, when there is a chip jam in one of the chip flutes since a chip jam in one of the chip flutes will lead to an increased pressure in the coolant channel associated with the affected chip flute.

According to one preferable embodiment, the flow control element moves back to the neutral position when the flow restriction in one of the chip flutes is removed. This configuration implies that the flow of coolant will again be evenly distributed between the first and second coolant channel when the chip jam has been removed. This ensures even distribution between the first and second chip flute to obtain best possible cooling and continuous evacuation of chips.

According to one preferable embodiment, the flow control element is entirely mechanical. This configuration is suitable and durable for the harsh conditions encountered when drilling in metallic materials. Flow control elements comprising electrical parts would be more susceptible to failure during the drilling operation.

According to one preferable embodiment, the flow control element is positioned between the rearward axial extensions of the first and second coolant channel when the flow control element is in the neutral position

With this configuration the flow control element is suitably positioned to be able to move to restrict the flow in either the first coolant channel or the second coolant channel.

According to one preferable embodiment, the flow control element is a pendulum rotatable around an axle.

This configuration is cost effective and having the flow control element in the form of a pendulum rotatable around an axle ensures that the flow control element automatically moves from a neutral position to an active position when there is a pressure difference between the first and second coolant channel.

According to one preferable embodiment, the pendulum is hinged to the axle by a hole at the rear end of the pendulum and that the axle is partially threaded and fastened to the shank by a threaded hole in the shank.

This configuration is cost effective and ensures simple installation and replacement of the pendulum.

According to one preferable embodiment, the hole in the shank is positioned on the rotation axis, perpendicular to the rotation axis and perpendicular to a line passing through the center of the first coolant channel and the center of the second coolant channel at the rear ends of the first and second coolant channel.

This configuration ensures that the pendulum can swing in directions to cover either the first or the second coolant channel to restrict the flow in respective channel.

According to one preferable embodiment, the coolant chamber, in a cross-section perpendicular to the rotation axis, has a width approximately equal to the distance between the radially outermost parts of the rear ends of the first and second coolant channels.

According to one preferable embodiment, the coolant chamber, in a cross-section perpendicular to the rotation axis, has a thickness approximately equal to the diameter of the first and second coolant channels at the rear ends of the first and second coolant channels.

This configuration ensures that the pendulum at its end points of its swing plane cover either the first or the second coolant channel to restrict the flow in respective channel.

The width of the coolant chamber may also be larger than the diameter of the first and second coolant channels at the rear ends of the first and second coolant channels.

According to one preferable embodiment, the pendulum has its front end approximately at the front end of the coolant chamber.

According to one preferable embodiment, the cross-sectional area of the front end of the pendulum is larger than the cross-sectional area of either of the first and the second coolant channel at the rear ends of the first and the second coolant channel. With this configuration the coolant flow in the first or the second coolant channel is effectively restricted when the pendulum is in an active position.

According to one preferable embodiment, the pendulum has a thickness that is approximately equal to the thickness of the coolant chamber.

This configuration further improves the restriction of coolant flow when the pendulum is in an active position.

According to one preferable embodiment, the drill has two axially extending arms at its front end, the arms spaced apart about the rotation axis to define a jaw, the cutting insert releasably mounted within the jaw between the arms.

With this configuration a single drill body can hold a variety of cutting inserts with varying geometries, allowing greater flexibility for optimum performance across multiple materials and applications.

According to one preferable embodiment, the drill has a central cutting insert releasably mounted in an insert seat at the front end of the drill and a peripheral cutting insert releasably mounted in an insert seat at the front end of the drill.

This configuration ensures efficient drilling and allows the usage of indexable cutting inserts which improves the economy of the drill operation.

Further advantages of the present invention will appear from the description following below.

### LIST OF DRAWINGS

Embodiments of the invention will now be described in detail with regard to the annexed drawings, in which:
Figs 1a, b are perspective views of the drill according to an embodiment of the present invention.
Fig 2 is a side view of the drill shown in Fig. 1 with interior parts of the drill shown in dashed lines and rear parts of the drill cut away to show the interior. This figure shows the flow control element in its neutral position.
Fig. 2a is a part of the same side view as in Fig. 1 but with the flow control element in an active position.
Fig. 3 is an end view of the rear end of the drill shown in Fig. 1 with the flow control element removed.
Fig. 4 is a perspective view of a flow control element in the form of a pendulum according to an embodiment of the invention.
Fig. 4a is a side view of the pendulum shown in Fig. 4.
Fig. 4b is a side view of the pendulum shown in Fig. 4.
Fig. 4c is a front end view of the pendulum shown in Fig. 4.
Figs 5a, b are perspective views of another embodiment of the invention.

### DETAILED DESCRIPTION OF EMBODIMENTS

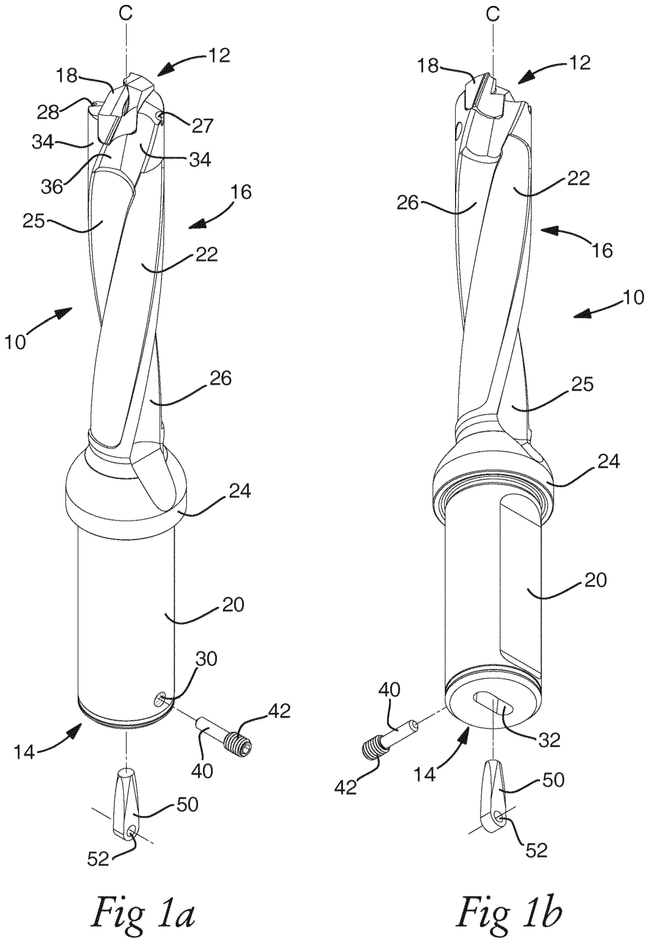

Reference is made to Fig. 1a-1b, which show a drill according to an embodiment of the invention. Such a drilling tool is a device which is adapted for use in metal or composite cutting operations, primarily drilling operations, but the drilling tool can also be used for helical interpolation, boring, plunging and turning operations. The drilling tool is arranged to be mounted or connected to a machine tool (not shown), such as a CNC machine, either directly or indirectly by one or more tool holders, to a tool spindle of the machine tool.

The drill, generally designated 10, has a central rotation axis (C) around which the drill is rotatable. The drill further has a front end 12, a rear end 14 and an envelope surface 16 that extends between the front end 12 and the rear end 14.

In the following description the front end of an element refers to the parts of the element that is closest to the front end 12 of the drill 10 when the element is mounted in the drill. Correspondingly, the rear end of an element refers to the parts of an element that is closest to the rear end 14 of the drill 10 when the element is mounted in the drill. Further, an axial direction refers to a direction parallel to the rotation axis (C) and a radial direction refers to a direction perpendicular to the rotation axis (C).

The drill 10 further has a shaft 22 extending axially rearward from the front end 12 of the drill 10 to a collar 24. A shank 20 extending axially forward from the rear end 14 of the drill 10 to the collar 24. The shank 20 is for attaching the drill 10 to a rotatable tool holder (not shown). The shaft 22 includes first 25 and second chip flutes 26 for transporting coolant and chips away from the bottom of a drilled hole. The first 25 and second chip flutes 26 preferably extends all the way to the collar 24 which directs coolant and chips away from the hole. The first 25 and second chip flutes 26 are helically shaped around the shaft 22 for efficient cooling and transportation of chips. The front of the collar 24 has a generally conical shape and has a diameter that is larger than the diameter of the shaft 22 and larger than the diameter of the shank 20, to efficiently direct chips away from the hole and away from the rotatable tool holder. The rear side of the collar is perpendicular to the rotation axis to act as a stop when inserting the shank 20 in the rotatable tool holder.

Axially extending arms 34, forming a jaw 36 between them, are positioned at the front end 12 of the drill. A cutting insert 18 is mounted in the jaw 36 by threaded screws (not shown). The cutting insert 18 extends across the whole diameter of the drill 10 and comprises cutting edges that meet at the center of the front end of the cutting insert 18 at the rotation axis (C) of the drill 10. The cutting insert 18 further comprises chip channels that connect to the chip flutes 25, 26 of the drill 10. The drill 10 is thus what is usually called an exchangeable head drill.

A coolant chamber 32 is positioned at the rear end 14 of the drill. The rear end of the coolant chamber 32 is connected to a coolant inlet (not shown). A flow control element 50, here in the form of a pendulum 50, can be fastened in the coolant chamber by an axle 40 through a hole 52 at the rear end of the pendulum 50. The axle 40 is inserted into a threaded hole 30 in the shank 20 and through the hole 52 in the pendulum. A threaded end 42 of the axle 40 engages the threaded hole 30 in the shank 20 to ensure that the axle is secured.

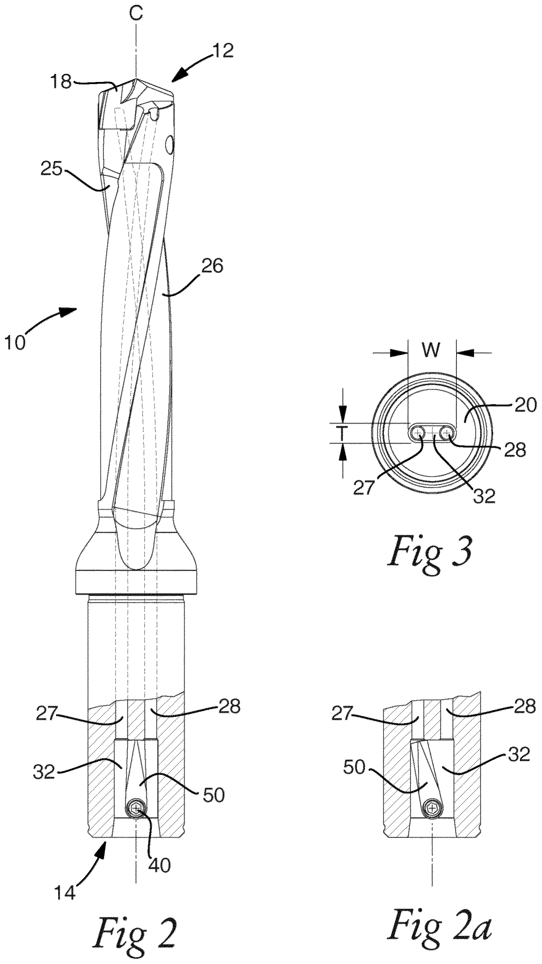

Referring now to Fig. 2 showing some of the features inside the drill 10. A first 27 and second coolant channel 28 starts at the front end of the coolant chamber 32 and terminates at, or close to, the front end 12 of the drill 10. Terminates in here means that the first and second coolant channels have their outlets at, or close to, the front end 12. Coolant will pass through the first and second coolant channels 27, 28 to cool the drill 10, the cutting insert 18 and the work piece that is being drilled. The coolant will further flush drilled chips away from the bottom of the drilled hole through the first and second chip flute 25, 26. The first and second coolant channels 27, 28 are preferably twisted in the drill 10.

The first coolant channel 27 is said to be associated with the first chip flute 25. That means that the first coolant channel has its outlet close to or in the first chip flute 25 and/or has its outlet directed towards the first chip flute 25. A majority of the coolant that flows in the first coolant channel 27 will pass through the first chip flute 25. The same applies for the second coolant channel 28 and the second chip flute 26.

The coolant chamber occupies approximately 40 % of the length of the shank 20 and the width W of the coolant chamber 32 is approximately 45 % of the diameter of the shank 20.

In the coolant chamber 32 the mounted pendulum 50 is seen hinged on the axle 40. The axle 40 is positioned perpendicular to the rotation axis (C) and perpendicular to a line passing through the center of the first coolant channel 27 and the center of the second coolant channel 28 at the rear ends of the first and second coolant channels 27, 28. By this configuration the pendulum 50 will have a swing plane that reaches the rear ends of the first and second coolant channels 27, 28. Fig. 2 shows the pendulum in a neutral position positioned along the rotation axis (C) between rearward axial extensions of the first and second coolant channel 27, 28. Fig. 2b shows the pendulum in an active position where it restricts the flow in the first coolant channel 27.

The axle 40 is positioned at a distance from the rear end 14 of the drill 10 that is approximately equal to 25 % of the length of the coolant chamber. The length of the pendulum 50 is such that the front end of the pendulum 50 extends approximately to, or very close to, the front end of the coolant chamber 32.

During drilling machined chips transported from the bottom of the drilled hole through the first and second chip flutes 25, 26 may get stuck, or jammed, between a chip flute and the wall of the drilled hole. If a chip gets jammed in the second chip flute 26 the flow of coolant will be restricted in that chip flute. This leads to an increased pressure of the coolant in the second coolant channel 28 associated with the second chip flute 26. An increased pressure in the second coolant channel 28 leads to a pressure difference between the first coolant channel 27 and the second coolant channel 28. The pressure difference moves the pendulum from a neutral position to an active position where it restricts the flow in the first coolant channel 27. The restriction of flow in the first coolant channel leads to an increased flow and pressure in the second coolant channel 28 and the associated second chip flute 26 which will help alleviate the problem of the jammed chips in the second chip flute 26. When the chip jam in the second chip flute 26 is removed the pressure difference between the first 27 and second coolant channel 28 will disappear and the pendulum will again move to a neutral position thus creating an even distribution of coolant flow to the first 27 and second coolant channel 28 and to the first 25 and second chip flute 26.

The forces arising from the pressure of the coolant acting on the pendulum is much larger than the forces that arises on the pendulum due to the rotation of the drill 10. The pendulum 50 can therefore restrict the flow in either of the first 27 or second coolant channel 28 when there is a pressure difference between them and return to a neutral position when the pressure difference between the first 27 and second coolant channel 28 ceases. The pressure of the coolant when entering the coolant chamber 32 from the coolant inlet is between 5 to 70 bar. Most often pressures between 10 to 30 bar are used.

Referring now to Fig. 3 which shows the drill 10 from its rear end 14 with the pendulum 50 and axle 40 removed. The coolant chamber 32 is positioned at the radial centre of the drill and the first 27 and second coolant channels 28 are positioned equidistant from the rotation axis (C). The coolant chamber 32 has the shape of a slot in a cross-section perpendicular to the rotation axis (C), with semi-circles at its short ends. The coolant chamber 32 has a width W that is approximately the same, or slightly larger, than the distance between the radially outermost points of the first and second coolant channels 27, 28. The coolant chamber 32 has a thickness T that is approximately the same, or slightly larger, than the diameter of the first and second coolant channels 27, 28. This configuration ensures that the pendulum 50 effectively restricts the flow in the first 27 or the second coolant channel 28 when the pendulum is at one of its end points in its swing plane in an active position.

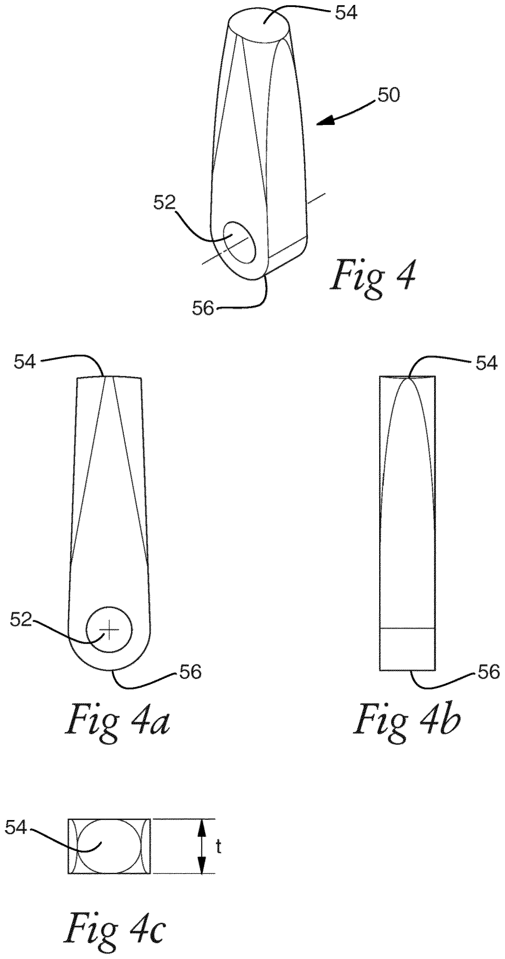

Referring now to Fig. 4 which shows the pendulum 50. The pendulum 50 is elongated and has a longer length in an axial direction than it is wide in a radial direction. The pendulum 50 is slightly wider close to its rear end than at its front end. Close to the rear end of the pendulum 50 a hole 52 for hinging the pendulum 50 to axle 40 is seen. The front end 54 of the pendulum 50 has a flat elliptical surface with an area that is larger than the area of either of the areas of the first 27 or the second coolant channel 28 at the rear end of the coolant channels. This ensures efficient restriction of flow in either of the first 27 or second coolant channel 28 when the pendulum 50 is in an active position. The pendulum 50 has a thickness t that is approximately the same size or slightly smaller than the thickness T of the coolant chamber 32 to ensure that the pendulum 50 swings within the coolant chamber 32 with ease and that it efficiently restricts the flow in the first 27 or second coolant channel 28 when the pendulum 50 is in an active position.

The rear end 56 of the pendulum 50 is curved to ensure a smooth flow of coolant around the pendulum 50 and to decrease stress in the pendulum 50. For the same reasons the sides of the pendulum 50 may be curved or beveled.

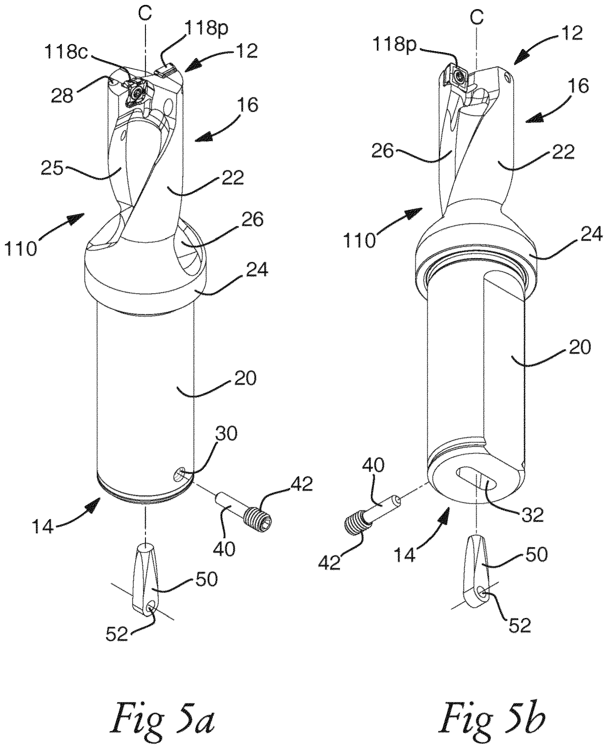

Referring now to Fig. 5 which shows another embodiment of the present invention. Same reference numerals designate the same features, as for the embodiments described above with reference to Figs. 1-4. The drill 110 in Fig. 5 differs from the embodiment in Fig. 1 substantially only in the arrangement of cutting insert(s) at the front end of the drill. More specifically, at the front end of drill 110 two insert seats are positioned to accommodate a central insert 118c and a peripheral insert 118p where the central insert 118c is positioned closer to the rotation axis (C) than the peripheral insert 118p. These inserts 118c, 118p are usually indexable meaning that several different cutting edges can be used on the same insert 118c, 118p.

The tool bodies for both types of drills 10, 110 are single-piece bodies made from one piece of material, preferably tool steel. The cutting inserts 18, 118c, 118p used with both types of drills 10, 110 are preferably made of a hard metal such as cemented carbide. The pendulum 50 and the axle 40 are preferably made of a steel material.

## Claims

1. A drill (10, 110) for metal cutting machining having a central rotation axis (C) defining a longitudinal direction of the drill (10, 110) and around which the drill is rotatable, comprising:
- an axially front end (12),
- an axially rear end (14),
- an envelope surface (16) extending between the front end (12) and the rear end (14),
- a shaft (22) extending axially rearward from the front end (12),
- a shank (20) extending axially forward from the rear end (14)
- at least one cutting insert (18, 118c, 118p) releasably mounted at the front end (12),
- a first (25) and a second chip flute (26) in the envelope surface (16) of the shaft (22),
- a coolant chamber (32) inside the shank (20),
- a first (27) and second coolant channel (28) extending from the front end of the coolant chamber (32) and terminating at the front end (12) of the drill, the first coolant channel (27) is associated with the first chip flute (25) and the second coolant channel (28) is associated with the second chip flute (26),
**characterized in that** the coolant chamber (32) comprises a flow control element (50), which is movable between a neutral position, in which coolant flow is distributed substantially equally to the first (27) and second coolant channels (28), and an active position, in which the flow control element (50) directs the coolant flow at least mainly to one of said coolant channels (27, 28), and that the flow control element (50) is arranged to move from said neutral position to said active position in response to a flow restriction in one of the chip flutes (25, 26), such that the coolant is directed at least mainly to said one coolant channel (27, 28) associated with the chip flute (25, 26) having a flow restriction.

2. A drill according to claim 1, **characterized in that** flow control element (50) automatically moves from the neutral position to an active position when there is a pressure difference in the coolant between the first (27) and the second coolant channel (28).

3. A drill according to claim 1 or 2, **characterized in that** the flow control element (50) moves back to the neutral position when the flow restriction in one of the chip flutes (25, 26) is removed.

4. A drill according to any of claims 1 to 3, **characterized in that** the flow control element (50) is entirely mechanical.

5. A drill according to any of the previous claims, **characterized in that** the flow control element (50) is positioned between the rearward axial extensions of the first (27) and second coolant channel (28) when the flow control element (50) is in the neutral position.

6. A drill according to any of the previous claims, **characterized in that** the flow control element (50) is a pendulum (50) rotatable around an axle (40).

7. A drill according to claim 6, **characterized in that** the pendulum (50) is hinged to the axle (40) by a hole (52) at the rear end of the pendulum (50) and that the axle (40) is partially threaded (42) and fastened to the shank (20) by a threaded hole (30) in the shank (20).

8. A drill according to claim 7, **characterized in that** the hole (30) in the shank (20) is positioned on the rotation axis (C), perpendicular to the rotation axis (C) and perpendicular to a line passing through the center of the first coolant channel (27) and the center of the second coolant channel (28) at the rear ends of the first (27) and second coolant channel (28).

9. A drill according to any of claims 6 to 8, **characterized in that** the coolant chamber (32), in a cross-section perpendicular to the rotation axis (C), has a width W that is approximately equal to the distance between the radially outermost parts of the rear ends of the first (27) and second coolant channels (28).

10. A drill according to any of claims 6 to 9, **characterized in that** the coolant chamber (32), in a cross-section perpendicular to the rotation axis (C), has a thickness T that is approximately equal to the diameter of the first (27) and second coolant channels (28) at the rear ends of the first (27) and second coolant channels (28).

11. A drill according to any of claims 6 to 10, **characterized in that** the pendulum (50) has its front end approximately at the front end of the coolant chamber (32).

12. A drill according to any of claim 6 to 11, **characterized in that** the cross-sectional area of the front end of the pendulum (50) is larger than the cross-sectional area of either of the first (27) and the second coolant channel (28) at the rear ends of the first (27) and second coolant channel (28).

13. A drill according to any of claims 10 to 12, **characterized in that** the pendulum (50) has a thickness t that is approximately equal to the thickness T of the coolant chamber (32).

14. A drill according to any of the previous claims, **characterized in that** the drill (10) has two axially extending arms (34) at its front end (12), the arms (34) spaced apart about the rotation axis (C) as to define a jaw (36), the cutting insert (18) releasably mounted within the jaw (36) between the arms (34).

15. A drill according to any of claims 1 to 13, **characterized in that** the drill (110) has a central cutting insert (118c) releasably mounted in an insert seat at the front end (12) of the drill (110) and a peripheral cutting insert (118p) releasably mounted in an insert seat at the front end (12) of the drill (110).

## Patentansprüche

1. Bohrer (10, 110) für die spanabhebende Bearbeitung von Metallen, der eine zentrale Rotationsachse (C) aufweist, die eine Längsrichtung des Bohrers (10, 110) definiert und um die der Bohrer rotierbar ist, mit:
- einem axial vorderen Ende (12),
- einem axial hinteren Ende (14),
- einer sich zwischen dem vorderen Ende (12) und dem hinteren Ende (14) erstreckenden Umfangsfläche (16),
- einer Welle (22), die sich vom vorderen Ende (12) axial nach hinten erstreckt,
- einem Schaft (20), der sich vom hinteren Ende (14) axial nach vorne erstreckt,
- wenigstens einem Schneideinsatz (18, 118c, 118p), der lösbar an dem vorderen Ende (12) montiert ist,
- einer ersten (25) und einer zweiten Spannut (26) in der Umfangsfläche (16) des Schafts (22),
- einer Kühlmittelkammer (32) im Inneren des Schaftes (20),
- einem ersten (27) und einem zweiten Kühlmittelkanal (28), der sich vom vorderen Ende der Kühlmittelkammer (32) aus erstreckt und am vorderen Ende (12) des Bohrers endet, wobei der erste Kühlmittelkanal (27) der ersten Spannut (25) und der zweite Kühlmittelkanal (28) der zweiten Spannut (26) zugeordnet ist,
**dadurch gekennzeichnet, dass** die Kühlmittelkammer (32) ein Strömungssteuerelement (50) aufweist, das zwischen einer neutralen Position, in der die Kühlmittelströmung im Wesentlichen gleichmäßig auf den ersten (27) und den zweiten Kühlmittelkanal (28) verteilt wird, und einer aktiven Position beweglich ist, in der das Strömungssteuerelement (50) die Kühlmittelströmung zumindest hauptsächlich zu einem der Kühlmittelkanäle (27, 28) leitet, und dass das Strömungssteuerungselement (50) so angeordnet ist, dass es sich in Reaktion auf eine Strömungseinschränkung in einer der Spannuten (25, 26) von der neutralen Position in die aktive Position bewegt, so dass das Kühlmittel wenigstens hauptsächlich zu dem einen Kühlmittelkanal (27, 28) geleitet wird, der der Spannut (25, 26) mit einer Strömungseinschränkung zugeordnet ist.

2. Bohrer nach Anspruch 1, **dadurch gekennzeichnet, dass** sich das Strömungssteuerungselement (50) automatisch von der neutralen Position in eine aktive Position bewegt, wenn ein Druckunterschied im Kühlmittel zwischen dem ersten (27) und dem zweiten Kühlmittelkanal (28) besteht.

3. Bohrer nach Anspruch 1 oder 2, **dadurch gekennzeichnet, dass** sich das Strömungssteuerelement (50) in die Neutralstellung zurückbewegt, wenn die Strömungsbegrenzung in einer der Spannuten (25, 26) beseitigt ist.

4. Bohrer nach einem der Ansprüche 1 bis 3, **dadurch gekennzeichnet, dass** das Strömungssteuerungselement (50) vollständig mechanisch ist.

5. Bohrer nach einem der vorhergehenden Ansprüche, **dadurch gekennzeichnet, daß** das Strömungssteuerelement (50) zwischen den hinteren axialen Verlängerungen des ersten (27) und des zweiten Kühlmittelkanals (28) angeordnet ist, wenn sich das Strömungssteuerelement (50) in der neutralen Stellung befindet.

6. Bohrer nach einem der vorhergehenden Ansprüche, **dadurch gekennzeichnet, daß** das Strömungssteuerungselement (50) ein um eine Achse (40) rotierbares Pendel (50) ist.

7. Bohrer nach Anspruch 6, **dadurch gekennzeichnet, dass** das Pendel (50) durch ein Loch (52) am hinteren Ende des Pendels (50) an der Achse (40) angelenkt ist und dass die Achse (40) teilweise mit einem Gewinde (42) versehen ist und durch ein Gewindeloch (30) im Schaft (20) am Schaft (20) befestigt ist.

8. Bohrer nach Anspruch 7, **dadurch gekennzeichnet, dass** das Loch (30) im Schaft (20) auf der Rotationsachse (C) senkrecht zur Rotationsachse (C) und senkrecht zu einer Linie angeordnet ist, die durch die Mitte des ersten Kühlmittelkanals (27) und die Mitte des zweiten Kühlmittelkanals (28) am hinteren Ende des ersten (27) und zweiten Kühlmittelkanals (28) verläuft.

9. Bohrer nach einem der Ansprüche 6 bis 8, **dadurch gekennzeichnet, dass** die Kühlmittelkammer (32) in einem Querschnitt senkrecht zur Rotationsachse (C) eine Breite W aufweist, die ungefähr gleich dem Abstand zwischen den radial äußersten Teilen der hinteren Enden des ersten (27) und zweiten Kühlmittelkanals (28) ist.

10. Bohrer nach einem der Ansprüche 6 bis 9, **dadurch gekennzeichnet, daß** die Kühlmittelkammer (32) in einem Querschnitt senkrecht zur Rotationsachse (C) eine Dimension T aufweist, die etwa gleich dem Durchmesser des ersten (27) und des zweiten Kühlmittelkanals (28) am hinteren Ende des ersten (27) und des zweiten Kühlmittelkanals (28) ist.

11. Bohrer nach einem der Ansprüche 6 bis 10, **dadurch gekennzeichnet, daß** das vordere Ende des Pendel (50) etwa am vorderen Ende der Kühlmittelkammer (32) liegt.

12. Bohrer nach einem der Ansprüche 6 bis 11, **dadurch gekennzeichnet, dass** die Querschnittsfläche des vorderen Endes des Pendels (50) größer ist als die Querschnittsfläche entweder des ersten (27) oder des zweiten Kühlmittelkanals (28) am hinteren Ende des ersten (27) und des zweiten Kühlmittelkanals (28).

13. Bohrer nach einem der Ansprüche 10 bis 12, **dadurch gekennzeichnet, daß** das Pendel (50) eine Dimension t aufweist, die etwa gleich der Dimension T der Kühlmittelkammer (32) ist.

14. Bohrer nach einem der vorhergehenden Ansprüche, **dadurch gekennzeichnet, dass** der Bohrer (10) an seinem vorderen Ende (12) zwei sich axial erstreckende Armbereiche (34) aufweist, wobei die Armbereiche (34) um die Rotationsachse (C) beabstandet sind, um einen Backenbereich (36) zu definieren, wobei der Schneideinsatz (18) zwischen den Armbereichen (34) innerhalb des Backenbereichs (36) lösbar montiert ist.

15. Bohrer nach einem der Ansprüche 1 bis 13, **dadurch gekennzeichnet, dass** der Bohrer (110) einen zentralen Schneideinsatz (118c) aufweist, der lösbar in einem Einsatzsitz am vorderen Ende (12) des Bohrers (110) montiert ist, und einen peripheren Schneideinsatz (118p), der lösbar in einem Einsatzsitz am vorderen Ende (12) des Bohrers (110) montiert ist.

## Revendications

1. Foret (10,110) pour usinage par découpe de métal présentant un axe de rotation central (C) définissant une direction longitudinale du foret (10, 110) et autour duquel le foret peut être entraîné en rotation, comprenant :
- une extrémité axialement avant (12),
- une extrémité axialement arrière (14),
- une surface d'enveloppe (16) s'étendant entre l'extrémité avant (12) et l'extrémité arrière (14),
- une tige (22) s'étendant axialement vers l'arrière depuis l'extrémité avant (12),
- une queue (20) s'étendant axialement vers l'avant depuis l'extrémité arrière (14),
- au moins une plaquette de coupe (18, 118c, 118p) montée de manière amovible au niveau de l'extrémité avant (12),
- une première (25) et une seconde (26) goujures à copeaux dans la surface d'enveloppe (16) de la tige (22),
- une chambre à réfrigérant (32) à l'intérieur de la queue (20),
- un premier (27) et un second (28) canaux à réfrigérant s'étendant depuis l'extrémité avant de la chambre à réfrigérant (32) et se terminant au niveau de l'extrémité avant (12) du foret, le premier canal à réfrigérant (27) est associé à la première goujure à copeaux (25) et le second canal à réfrigérant (28) est associé à la seconde goujure à copeaux (26),
**caractérisé en ce que** la chambre à réfrigérant (32) comprend un élément de régulation d'écoulement (50), lequel peut être déplacé entre une position neutre, dans laquelle l'écoulement de réfrigérant est distribué sensiblement de manière égale aux premier (27) et second (28) canaux à réfrigérant, et une position active, dans laquelle l'élément de régulation d'écoulement (50) oriente l'écoulement de réfrigérant au moins principalement vers l'un desdits canaux à réfrigérant (27, 28), et **en ce que** l'élément de régulation d'écoulement (50) est agencé pour se déplacer de ladite position neutre à ladite position active en réponse à une restriction d'écoulement dans l'une des goujures à copeaux (25, 26), de telle sorte que le réfrigérant est orienté au moins principalement vers ledit un canal à réfrigérant (27, 28) associé à la goujure à copeaux (25, 26) ayant une restriction d'écoulement.

2. Foret selon la revendication 1, **caractérisé en ce que** l'élément de régulation d'écoulement (50) se déplace automatiquement de la position neutre à une position active lorsqu'il existe une différence de pression dans le réfrigérant entre le premier (27) et le second (28) canaux à réfrigérant.

3. Foret selon la revendication 1 ou 2, **caractérisé en ce que** l'élément de régulation d'écoulement (50) revient à la position neutre lorsque la restriction d'écoulement dans l'une des goujures à copeaux (25, 26) est éliminée.

4. Foret selon l'une quelconque des revendications 1 à 3, **caractérisé en ce que** l'élément de régulation d'écoulement (50) est entièrement mécanique.

5. Foret selon l'une quelconque des revendications précédentes, **caractérisé en ce que** l'élément de régulation d'écoulement (50) est positionné entre les étendues axiales vers l'arrière des premier (27) et second (28) canaux à réfrigérant lorsque l'élément de régulation d'écoulement (50) se trouve dans la position neutre.

6. Foret selon l'une quelconque des revendications précédentes, **caractérisé en ce que** l'élément de régulation d'écoulement (50) est un pendule (50) pouvant être entraîné en rotation autour d'un axe (40).

7. Foret selon la revendication 6, **caractérisé en ce que** le pendule (50) est articulé sur l'axe (40) par le biais d'un trou (52) au niveau de l'extrémité arrière du pendule (50) et **en ce que** l'axe (40) est en partie fileté (42) et fixé sur la queue (20) par le biais d'un trou taraudé (30) dans la queue (20).

8. Foret selon la revendication 7, **caractérisé en ce que** le trou (30) dans la queue (20) est positionné sur l'axe de rotation (C), perpendiculairement à l'axe de rotation (C) et perpendiculairement à une droite passant par le centre du premier canal à réfrigérant (27) et le centre du second canal à réfrigérant (28) au niveaux des extrémités arrière des premier (27) et second (28) canaux à réfrigérant.

9. Foret selon l'une quelconque des revendications 6 à 8, **caractérisé en ce que** la chambre à réfrigérant (32), dans une section transversale perpendiculaire à l'axe de rotation (C), présente une largeur W qui est approximativement égale à la distance entre les parties radialement les plus à l'extérieur des extrémités arrière des premier (27) et second (28) canaux à réfrigérant.

10. Foret selon l'une quelconque des revendications 6 à 9, **caractérisé en ce que** la chambre à réfrigérant (32), dans une section transversale perpendiculaire à l'axe de rotation (C), présente une épaisseur T qui est approximativement égale au diamètre des premier (27) et second (28) canaux à réfrigérant au niveau des extrémités arrière des premier (27) et second (28) canaux à réfrigérant.

11. Foret selon l'une quelconque des revendications 6 à 10, **caractérisé en ce que** le pendule (50) a son extrémité avant approximativement au niveau de l'extrémité avant de la chambre à réfrigérant (32).

12. Foret selon l'une quelconque des revendications 6 à 11, **caractérisé en ce que** l'aire de section transversale de l'extrémité avant du pendule (50) est supérieure à l'aire de section transversale de l'un ou l'autre des premier (27) et second (28) canaux à réfrigérant au niveau des extrémités arrière des premier (27) et second (28) canaux à réfrigérant.

13. Foret selon l'une quelconque des revendications 10 à 12, **caractérisé en ce que** le pendule (50) présente une épaisseur t qui est approximativement égale à l'épaisseur T de la chambre à réfrigérant (32).

14. Foret selon l'une quelconque des revendications précédentes, **caractérisé en ce que** le foret (10) présente deux bras s'étendant axialement (34) au niveau de son extrémité avant (12), les bras (34) étant espacés autour de l'axe de rotation (C) de sorte à définir une mâchoire (36), la plaquette de coupe (18) étant montée de manière amovible à l'intérieur de la mâchoire (36) entre les bras (34).

15. Foret selon l'une quelconque des revendications 1 à 13, **caractérisé en ce que** le foret (110) présente une plaquette de coupe centrale (118c) montée de manière amovible dans un siège de plaquette au niveau de l'extrémité avant (12) du foret (110) et une plaquette de coupe périphérique (118p) montée de manière amovible dans un siège de plaquette au niveau de l'extrémité avant (12) du foret (110).
